Europäisches Patentamt

European Patent Office

Office européen des brevets

(19)

(11) Publication number: **0 161 777**
A2

# EUROPEAN PATENT APPLICATION

(21) Application number: 85302341.4

(22) Date of filing: 03.04.85

(51) Int. Cl.⁴: **G 01 L 9/00,** G 01 L 1/10

(30) Priority: 04.04.84 GB 8408722

(43) Date of publication of application: 21.11.85 Bulletin 85/47

(84) Designated Contracting States: **DE FR GB NL SE**

(71) Applicant: **MAATSCHAPPIJ VAN BERKEL'S PATENT N.V.,** P.O. Box 6018 Kelleweg 5, NL-3029 BR Rotterdam (NL)

(72) Inventor: **Smits, Johannes Gerardus,** 1101 Stearns Hill Road, Waltham Massachusetts 02154 (US)

(74) Representative: **MacDougall, Donald Carmichael et al, Messrs. Cruikshank & Fairweather** 19 Royal Exchange Square, Glasgow G1 3AE, Scotland (GB)

(54) Sensor devices.

(57) A sensor device (12) comprises a very thin membrane (10) etched from a wafer of silicon (14), the membrane in one embodiment having a circular periphery (9) which is integrally secured at periphery (9) to wafer (14). Membrane (10) is driven into resonant oscillation and is substantially sustained in that condition by an electrical circuit (13) incorporating a feedback loop with piezo electric drive/receive elements (11) mounted on the membrane (10). A load W is imposed via a column (15) on membrane (10) to strain-load the membrane and the variation of oscillation frequency of the membrane (10) is measured by circuitry (13) to provide a measure of the load W. In another embodiment membrane (10) is elongate and mounted at its opposite ends on portions of the wafer (14).

- 1 -

SENSOR DEVICES

This invention relates to sensor devices.

According to the present invention there is provided a sensor device comprising a thin membrane held by mounting means, the membrane being driven into resonant oscillation and substantially sustained therein by an electrical feedback loop incorporating piezoelectric drive/receive means mounted on the membrane, load means for strain-loading the membrane by an amount which is a function of a substantially static load or pressure the magnitude of which is to be sensed by the sensor device, and means for measuring the oscillation frequency of the membrane when strain-loaded to provide, as a function of the resonance frequency, a measure of said substantially static load or pressure.

Preferably said drive/receive means are located on the membrane in a zone providing maximum resonance transfer efficiency. Depending upon the location and drive of the drive/receive means the vibrational mode may be transverse or longitudinal.

The receive means may be separate from the drive means and located in the same zone as the drive means or may be located elsewhere on the membrane. Conveniently, when the drive means and receive means are separate and located in the same zone of the membrane, the drive and receive means are arranged alternately along a predetermined path.

Preferably the membrane is made of silicon. Conveniently the silicon membrane is formed by local etching of a silicon wafer utilising conventional silicon etching techniques so as to be as thin as technology permits. By way of example the membrane may be as thin as one micron. Conveniently the drive/receive means are bonded to the silicon membrane.

The membrane is preferably held by the mounting means by being integral with the mounting means. The membrane may for example be circular, square or rectangular in which case the mounting means is arranged to hold the membrane along the entire periphery of the membrane; or the membrane may be elongate in which case the mounting means is arranged to hold the opposite ends of the membrane.

In the case where the mounting means holds the membrane along the periphery of the membrane the load means is arranged to deflect a central region of the membrane to impose strain-loading in a direction perpendicular to the plane of the membrane. In the case where the membrane is elongate the load means is preferably arranged to apply the strain-loading to the ends of the membrane either longitudinally or transversely.

Preferably said sensor device is one of a matched pair of which the other sensor device comprises load means for strain-loading the membrane by a constant amount. With this arrangement the said other sensor device provides a measure of the oscillation frequency in the presence of a constant strain loading by means of a reference mass or pressure. Also, this arrangement provides for automatic compensation of variations due to thermal effects, local variations in gravity, and in relation to vibrations of the entire sensor device. Furthermore this arrangement permits loading at certain angles other than normal to the sensor.

Conveniently when the sensor device is made of silicon the electronic circuitry for operating the electrical feedback loop and the measuring means is mounted on a non-vibrating portion of the silicon wafer.

Embodiments of the present invention will now be described by way of example with reference to the accompanying drawings, in which:

Fig. 1 illustrates a first form of sensor device in accordance with the present invention;

Fig. 2 illustrates a modification of the Fig. 1 device;

Fig. 3 illustrates a second form of sensor device in accordance with the present invention;

- 3 -

Figs. 4 and 5 are schematic views of the Fig. 3 device;  and

Fig. 6 illustrates a sensor device in association with a force reduction assembly.

A thin membrane when driven into resonant oscillation vibrates at a frequency (f) which approximates to the relationship:

$$f = f_o \sqrt{1 + \alpha p^2 + \beta p} \qquad \ldots \ldots \ldots (1)$$

where:

$f_o$ = the unloaded resonance frequency

$p$ = the static strain-load

$\alpha$ = the bending constant of the membrane

$\beta$ = the strain constant of the membrane

The membrane may be made of any material but for the purpose of manufacturing a membrane which is thin as distinct from thick it is preferred that the membrane be made of silicon, having been manufactured by etching down a silicon wafer utilising conventional silicon etching techniques.   For the purposes of the present invention a thin membrane has a thickness less than about 25 microns, substantially smaller thicknesses being preferred and for example thicknesses of the order of 1 micron are now technically possible.

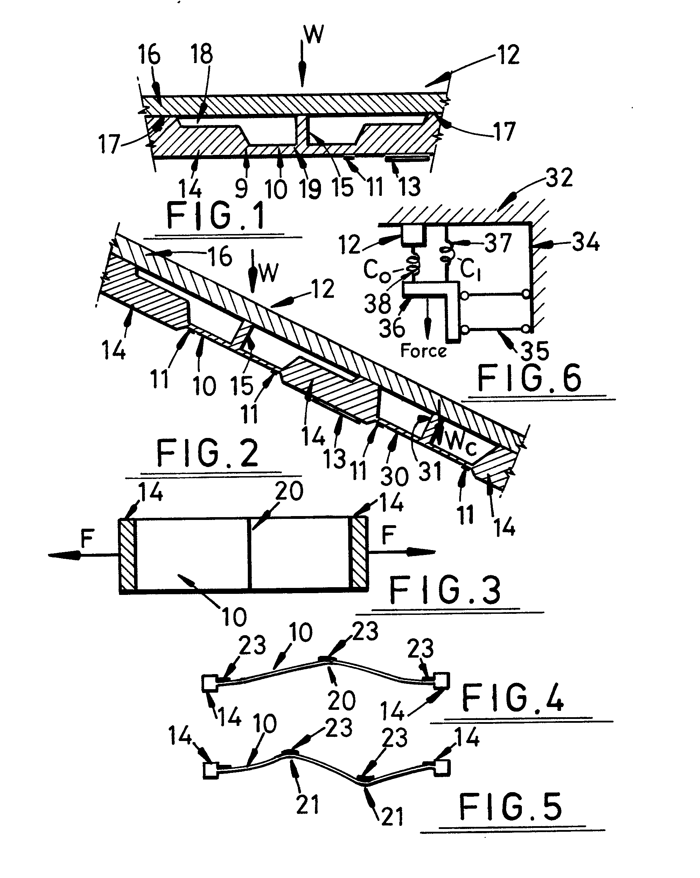

Fig. 1 illustrates a sensor device 12 incorporating a membrane 10 provided with a circular periphery 9 held by a mounting means 14 continuously along that periphery.   A load means 15 in the form of a pillar formed on the membrane for strain-loading the membrane is provided preferably centrally as shown, and in order to transfer a portion only of a substantially static load or pressure W to the load means 15 the load W is applied to a plate 16 (which may be made of any material) secured to mounting means 14 at interface 17.   By virtue of mounting means 14 being relieved annularly at 18 the interface 17 is located at a greater radial distance than periphery 9.   Piezoelectric drive/ receive means 11 (only one being shown in the interests of clarity) are located on the membrane 10 with at least the drive means being located in a zone providing good resonance transfer efficiency (Q), that is mechanical resonant vibration occurs with a substantial amplitude of vibration arising from a small amplitude signal applied to the drive means. In the sensor device 12 this zone may be at the circular periphery 9 or at the circular boundary 19 at the base of column 15 or at certain other locations. In any event it is preferred that the drive/receive means 11 be electrically connected in a feedback loop operating to cause membrane 10 to vibrate in its first order mode since this mode shows the best Q value.

As previously explained the receive means may be located in the same zone as the drive means or may be located elsewhere on the membrane 10, preferably in one of the other zones 9, 19, unused by the drive means. Alternatively, both the drive means and the receive means may be located in the same zone in which case it is preferred that they are arranged alternately along a predetermined path within that zone. A still further alternative, of course, is that the drive/receive means is a single element functioning simultaneously or alternately as drive means and receive means.

The drive/receive means 11 is electrically operated by electronic circuitry 13 mounted on means 14 and circuitry 13 incorporates frequency measuring means connected to the receive means 11 whereby the frequency of vibration is measured to provide a measure of the load W.

The membrane 10 may be etched from a silicon wafer and, as is shown in Fig. 2, the wafer may incorporate a second membrane 30 with central pillar 31 to which may be applied a constant load $W_c$. With this arrangement the sensor device 12 operates independently of its inclination to the horizontal at least for a small range of tilt angles as previously discussed.

The piezoelectric drive/receive means 11 may be in the form of one or more piezoelectric zinc oxide pads applied to either or both surfaces of the membrane 10 by sputtering. The membrane 10 which preferably is made of silicon has a thickness of about 1 micron and an areal extent of about 1 square millimetre. In order to avoid barometric influences either plate 16 or wafer 14 may be apertured.

As is shown in Figs. 3, 4 and 5 the membrane 10 may be elongate and of rectangular cross-section, the ends of the membrane 10 being held by mounting means 14 to which is applied either a tensile or compressive load or force F. In this case the preferred zone for location of the drive/ receive means is a straight line perpendicular to the direction of the strain applied by force F and located at the position of maximum strain, this being shown in Fig. 4 for first order vibration mode as line 20 and in Fig. 5 for second order vibration mode as lines 21. Also, in this arrangement the drive means and/or the receive means may be located at the ends of the membrane 10 adjoining the mounting means 14. Drive/receive means 23 are illustrated.

With regard to the load means whereby force F is applied in the Fig. 3 embodiment this may be by way of a frame having parallel members interconnected by spring means such as leaf springs with the membrane 10 connected at one end to one parallel member and actuated at its other end by the other parallel member indirectly via a resilient link. For example, in the manner disclosed in U.S. Patent No. 4,300,648.

Fig. 6 illustrates a sensor device 12 in association with a force-reduction assembly 32 comprising a rigid L-shaped support 34, a movable frame element 36 which is guided by guides 35 for movement parallel to one limb of support 34, the element 36 being connected to the other limb of support 34 directly by a spring 37 and indirectly by a spring 38 in series with the sensor device 12. Spring 38 has a spring constant $C_o$ which is less than the spring constant $C_1$ of spring 37 so that the force applied to the element 36 is reduced by the ratio $C_o/(C_o + C_1)$ at the sensor device 12.

0161777

- 7 -

<u>CLAIMS</u>

1. A sensor device characterised by a thin membrane (10) held by mounting means (14), the membrane (10) being driven into resonant oscillation and substantially sustained therein by an electrical feedback loop incorporating piezoelectric drive/receive means (11) mounted on the membrane (10), load means (15) for strain loading the membrane (10) by an amount which is a function of a substantially static load or pressure the magnitude of which is to be sensed by the device (12), and means (13) for measuring the oscillation frequency of the membrane (10) when strain loaded to provide, as a function of the resonance frequency, a measure of said substantially static load or pressure.

2. A device as claimed in claim 1, characterised in that said drive/receive means (11) are located on the membrane (10) in a zone (9,19,20,21) providing maximum resonance transfer efficiency.

3. A device as claimed in either preceding claim, characterised in that the receive means (11) are separate from the drive means (11) and are located in the same zone (9,19,20,21) as the drive means (11).

4. A device as claimed in any preceding claim, characterised in that the membrane (10) is made of silicon having been etched down from a silicon wafer the unetched part of which forms the mounting means (14).

5. A device as claimed in any preceding claim, characterised in that the drive/receive means (11) are formed by piezoelectric zinc oxide pads adherent to the membrane (10).

6. A device as claimed in claim 5, characterised in that the drive/receive means (11) in the form of piezoelectric zinc oxide pads are formed by sputtering.

7.  A device as claimed in any preceding claim,
characterised in that the drive/receive means (11) are
electrically connected to electrical circuitry (13)
mounted on a non-vibrating portion of the device (12).

8.  A device as claimed in any preceding claim,
characterised in that the device (12) is one of a matched
pair of such devices (12) the other sensor device being
strain-loaded by a constant loading.

0161777

FIG.1

FIG.2

FIG.3

FIG.4

FIG.5

FIG.6